# EUROPEAN PATENT APPLICATION

(11) **EP 4 579 855 A1**
(43) Date of publication of application: **02.07.2025**
(21) Application number: 23917115.0
(22) Date of filing: 25.10.2023
(51) Int. Cl.: H01M 10/0567, H01M 10/0566, H01M 10/0564

(54) **ELECTROLYTE FOR SODIUM SECONDARY BATTERY, SODIUM SECONDARY BATTERY, AND ELECTRIC DEVICE**

(30) Priority: 16.01.2023 CN 202310070448
(71) Applicant: Contemporary Amperex Technology (Hong Kong) Limited, Central (HK)
(72) Inventor: LI, Xiaolong, Ningde, Fujian 352100 (CN); GUO, Bingkun, Ningde, Fujian 352100 (CN); ZHANG, Xinxin, Ningde, Fujian 352100 (CN); CHEN, Shigang, Ningde, Fujian 352100 (CN); LIU, Ben, Ningde, Fujian 352100 (CN); YAO, Shikang, Ningde, Fujian 352100 (CN); ZHOU, Qicheng, Ningde, Fujian 352100 (CN); LAN, Jiadian, Ningde, Fujian 352100 (CN); LIN, Wenguang, Ningde, Fujian 352100 (CN)
(74) Representative: von Tietzen und Hennig, Nikolaus
(86) International application number: PCT/CN2023/126598
(87) International publication number: WO 2024/152647

(57) **Abstract**

This application provides an electrolyte for a sodium secondary battery, a sodium secondary battery, and an electric device. An electrolyte for a sodium secondary battery is provided, where the electrolyte includes an additive, and the additive includes a sulfate ester compound or a sulfonate ester compound. In this application, through the addition of an additive, including a sulfate ester compound or a sulfonate ester compound, in the electrolyte, the high-temperature cycling performance of the battery can be improved, the high-temperature gas generation phenomenon of the battery can be alleviated, and the electrochemical performance and safety performance of the battery can be improved.

## Description

### CROSS-REFERENCE TO RELATED APPLICATIONS

This application refers to Chinese Patent Application 202310070448.X, filed on January 16, 2023 and entitled "ELECTROLYTE FOR SODIUM SECONDARY BATTERY, SODIUM SECONDARY BATTERY, AND ELECTRIC DEVICE", which is incorporated herein by reference in its entirety.

### TECHNICAL FIELD

This application relates to the field of sodium secondary battery technologies, and in particular, to an electrolyte for a sodium secondary battery, a sodium secondary battery, and an electric device.

### BACKGROUND

With the development of battery technologies, lithium secondary batteries have dominated the portable electronics market and have gradually expanded into large-scale energy storage applications. However, existing lithium resources can no longer meet the urgent demand for establishing large-scale and high-energy-density energy storage systems. Therefore, due to the abundant sodium reserves and low cost, sodium secondary batteries, which have electrochemical characteristics similar to those of lithium secondary batteries, have emerged. However, the widely researched sodium secondary batteries currently suffer poor high-temperature cycling performance and severe high-temperature gas generation phenomenon, which greatly limits their further application.

### SUMMARY

In view of the problems present in the background, this application provides an electrolyte for a sodium secondary battery, aiming to improve the high-temperature cycling performance of sodium secondary batteries, reduce high-temperature gas generation of sodium secondary batteries, and enhance the electrochemical performance and safety performance of sodium secondary batteries under high temperatures.

According to a first aspect of this application, an electrolyte for a sodium secondary battery is provided, where the electrolyte includes an additive, and the additive includes a sulfate ester compound or a sulfonate ester compound.

The sulfate ester compound or the sulfonate ester compound has a low lowest occupied molecular orbital (LUMO) absolute value, which allows it to be reduced on a surface of the negative electrode, forming an SEI mainly composed of an organic sulfide. This greatly enhances the structural stability and uniformity of the SEI on the surface of the negative electrode, reduces direct contact between the negative electrode and the solvent, minimizes side reactions between the negative electrode and the solvent, improves the high-temperature cycling performance of the sodium secondary battery, reduces high-temperature gas generation of the sodium secondary battery, and enhances the electrochemical performance and safety performance of the sodium secondary battery under high temperatures.

In any embodiment, the sulfonate ester compound includes one or more of compounds represented by formula I: 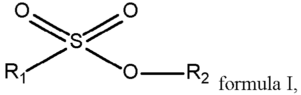 where
R1 and R2 together with sulfur and oxygen to which they are connected form a 4-, 5-, or 6-membered ring, where the ring optionally has a double bond and optionally contains one or two sulfonate ester groups, and hydrogen on the ring is optionally replaced by a halogen or a C₁₋₃ alkyl group.

In any embodiment, the sulfonate ester compound includes one or more of 1,3-propane sultone, 3-fluoro-1,3-propane sultone, 1-methyl-1,3-propane sultone, 1,4-butane sultone, 1,4-butene sultone, 1,3-propene sultone, and methylene disulfonate, optionally one or more of 1,3-propane sultone, 1,4-butane sultone, 1,3-propylene sultone, and methylene disulfonate.

In any embodiment, the sulfate ester compound includes one or more of compounds represented by formula II: 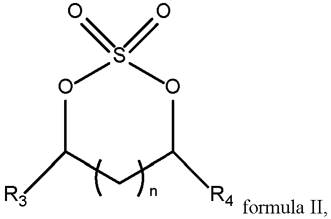 where
n is any integer from 0 to 3, and R₃ and R₄ are each independently selected from hydrogen, fluorine, cyano group, alkenyl group, substituted or unsubstituted C₁₋₆ alkyl group, and

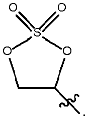

In any embodiment, the sulfate ester compound includes one or more of ethylene sulfate, 4-methyl-ethylene sulfate, 4-fluoroethylene sulfate, 4-n-propylethylene sulfate, 4,4'-bis-ethylene sulfate, 4-vinyl-ethylene sulfate, 4-ethylethylene sulfate, 4,5-difluoroethylene sulfate, and 4-cyanoethylene sulfate, optionally one or two of ethylene sulfate, and 4-methyl-ethylene sulfate.

In any embodiment, based on a total mass of the electrolyte, a mass percentage of the additive is 0.2%-10%, optionally 0.3%-6%.

When the mass percentage of the additive is within an appropriate range, the battery has excellent room-temperature cycling performance and high-temperature cycling performance, with low high-temperature gas generation, thereby extending the usable temperature range of the battery.

In any embodiment, the electrolyte further includes a sodium salt and an ether solvent, and based on the total mass of the electrolyte, a mass percentage of the sodium salt is 3%-40%, optionally 5%-30%.

When the mass percentage of the sodium salt is within an appropriate range, the battery has excellent room-temperature cycling performance and high-temperature cycling performance, with low high-temperature gas generation, thereby extending the usable temperature range of the battery.

When the electrolyte contains an ether solvent, the room-temperature cycling performance and high-temperature cycling performance of the battery can be improved, the high-temperature gas generation phenomenon of the battery can be alleviated, and the electrochemical performance and safety performance of the battery can be improved.

In any embodiment, the sodium salt includes one or more of sodium hexafluorophosphate, sodium tetrafluoroborate, sodium hexafluoroarsenate, and sodium trifluoroacetate.

In any embodiment, the ether solvent includes one or more of ethylene glycol dimethyl ether, diethylene glycol dimethyl ether, triethylene glycol dimethyl ether, tetraethylene glycol dimethyl ether, ethylene glycol diethyl ether, ethylene glycol dibutyl ether, tetrahydrofuran, and methyltetrahydrofuran, optionally one or more of ethylene glycol dimethyl ether, diethylene glycol dimethyl ether, and ethylene glycol diethyl ether.

In any embodiment, the electrolyte further includes a lithium salt.

When the electrolyte includes a lithium salt, the room-temperature cycling performance and high-temperature cycling performance of the battery can be improved, the high-temperature gas generation phenomenon of the battery can be alleviated, and the electrochemical performance and safety performance of the battery can be improved.

In any embodiment, the lithium salt includes one or more of lithium hexafluorophosphate, lithium tetrafluoroborate, lithium perchlorate, lithium hexafluoroarsenate, lithium trifluoroacetate, lithium tetraphenylborate, lithium trifluoromethylsulfonate, lithium bis(oxalatoborate), lithium difluorooxalatoborate, lithium bis(fluorosulfonyl)imide, and lithium bis(trifluoromethylsulfonyl)imide.

According to a second aspect of this application, a sodium secondary battery is provided, where the sodium secondary battery includes the electrolyte of the first aspect.

In any embodiment, the sodium secondary battery includes a negative electrode plate, the negative electrode plate including a negative electrode current collector and a primer coating formed on at least one side of the negative electrode current collector, and
the sodium secondary battery satisfies the following relational expression: 0.1 ≤ Z - 0.01 X ≤ 5, where
X g/m² is the surface density of the primer coating, and Z% is the mass percentage of the additive based on the total mass of the electrolyte.

Through the controlling of the surface density X g/m² of the primer coating on at least one side of the negative electrode current collector and the mass percentage Z% of the additive based on the total mass of the electrolyte to satisfy 0.1 ≤ Z - 0.01X ≤ 5, the high-temperature cycling performance of the battery can be improved, the high-temperature gas generation phenomenon of the battery can be alleviated, and the usable temperature range of the battery can be extended.

In any embodiment, the sodium secondary battery includes the negative electrode plate, the negative electrode plate including the negative electrode current collector and the primer coating formed on at least one side of the negative electrode current collector, the electrolyte includes a lithium salt, and the sodium secondary battery satisfies the following relational expression: 0.84 ≤ Y - 0.01X ≤ 5.84, where
X g/m² is the surface density of the primer coating, and Y% is the mass percentage of the lithium salt based on the total mass of the electrolyte.

Through the controlling of the surface density X g/m² of the primer coating on at least one side of the negative electrode current collector and the mass percentage Y% of the lithium salt based on the total mass of the electrolyte to satisfy the relational expression 0.84 ≤ Y - 0.01X ≤ 5.84, the room-temperature cycling performance and high-temperature cycling performance of the battery can be improved, the high-temperature gas generation phenomenon of the battery can be alleviated, and the electrochemical performance and safety performance of the battery can be improved.

In any embodiment, the surface density of the primer coating is 5g/m² - 50 g/m².

When the surface density of the primer coating is within an appropriate range, the room-temperature cycling performance and high-temperature cycling performance of the battery can be improved, the high-temperature gas generation phenomenon of the battery can be alleviated, and the electrochemical performance and safety performance of the battery can be improved.

In any embodiment, the primer coating includes one or more of carbon coating, alloy coating, and metal oxide coating, optionally carbon coating.

In any embodiment, the primer coating contains one or more of super conductive carbon black, Ketjen black, acetylene black, carbon nanotubes, and graphene.

In any embodiment, the sodium secondary battery is a sodium metal battery with no negative electrode.

When the sodium secondary battery is a sodium metal battery with no negative electrode, the room-temperature cycling performance and high-temperature cycling performance of the battery can be improved, the high-temperature gas generation phenomenon of the battery can be alleviated, and the electrochemical performance and safety performance of the battery in high temperatures can be improved.

According to a third aspect of this application, a battery module is provided, including the sodium secondary battery of the second aspect.

According to a fourth aspect of this application, a battery pack is provided, including the sodium secondary battery of the second aspect or the battery module of the third aspect.

According to a fifth aspect of this application, an electric device is provided, including at least one of the sodium secondary battery of the second aspect, the battery module of the third aspect, or the battery pack of the fourth aspect.

### BRIEF DESCRIPTION OF DRAWINGS

FIG. 1 is a schematic diagram of a sodium secondary battery according to an embodiment of this application;
FIG. 2 is an exploded view of the sodium secondary battery according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application shown in FIG. 4; and
FIG. 6 is a schematic diagram of an electric device using a sodium secondary battery as a power source according to an embodiment of this application.

### Reference signs:

1. battery pack; 2. upper box body; 3. lower box body; 4. battery module; 5. sodium secondary battery; 51. housing; 52. electrode assembly; and 53. cover plate.

### DESCRIPTION OF EMBODIMENTS

The following specifically discloses in detail embodiments of the sodium secondary battery, battery module, battery pack, and electric device of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Under high-temperature conditions, the inorganic components in the solid electrolyte interface (SEI) of the sodium secondary battery will dissolve, causing the SEI to exhibit a porous structure. The electrolyte continuously decomposes on the surface of the negative electrode, and the SEI continuously decomposes and regenerates, continuously consuming the limited sodium resources inside the sodium secondary battery, and resulting in greater self-discharge of the sodium secondary battery and poorer cycling performance. At the same time, under high-temperature conditions, the positive and negative electrodes of the sodium secondary battery will chemically react with the electrolyte, releasing heat and generating gas, causing the battery to swell in volume and, in severe cases, possibly causing a short circuit within the battery. This reduces the safety performance of the sodium secondary battery and severely limits the application of the sodium secondary battery.

### [Electrolyte for sodium secondary battery]

This application provides an electrolyte for a sodium secondary battery, where the electrolyte includes an additive, and the additive includes a sulfate ester compound or a sulfonate ester compound.

In this document, the term "sodium secondary battery" refers to a secondary battery that uses sodium ions as charge carriers. The negative electrode active material of the sodium secondary battery includes carbon-based material, titanium-based material, alloy material, layered transition metal oxide, layered transition metal selenide, organic material, or metallic sodium. A sodium secondary battery that uses metallic sodium as the negative electrode active material is called a sodium metal battery.

In some embodiments, the negative electrode active material of the sodium secondary battery includes one or more of graphite carbon material, amorphous carbon material, and nano-carbon material.

In some embodiments, the negative electrode active material of the sodium secondary battery is hard carbon.

In some embodiments, the negative electrode active material of the sodium secondary battery is metallic sodium.

In this document, the term "sodium metal battery with no negative electrode" refers to a sodium metal battery where a current collector is used as the negative electrode during assembly, and sodium ions are deposited onto the current collector to form a sodium metal negative electrode during charging.

In this document, the term "electrolyte" refers to a medium for ion transport in the sodium secondary battery, including liquid electrolyte, solid electrolyte, or quasi-solid electrolyte.

In this document, the term "additive" refers to a component in the electrolyte that is present in a small amount and may be gas, liquid, or solid. Conceptually, the difference between an additive, a solvent, and a sodium salt is only in their respective amounts in the electrolyte.

In this document, the term "sulfate ester compound" refers to a compound containing a 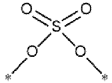 group.

In this document, the term "sulfonate ester compound" refers to a compound containing a 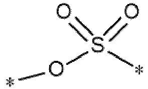 group or a 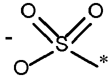 group.

A sulfate ester compound or a sulfonate ester compound has a low lowest occupied molecular orbital (LUMO) absolute value and will undergo a reduction reaction preferentially over a solvent and a sodium salt, forming a highly thermally stable organic sulfide. This results in the formation of a structurally stable and uniformly distributed SEI on a surface of the negative electrode. On the one hand, an SEI containing a large amount of sulfide is not prone to secondary decomposition and regeneration, reducing the consumption of sodium inside the sodium secondary battery and improving the high-temperature cycling performance of the sodium secondary battery. On the other hand, a structurally stable and uniformly distributed SEI can reduce direct contact between the electrolyte and the negative electrode, decrease side reactions between the electrolyte and the negative electrode, inhibit hydrogen generation during high-temperature cycling in the sodium secondary battery, and alleviate the high-temperature gas generation phenomenon of the sodium secondary battery.

In some embodiments, the sulfonate ester compound includes one or more of compounds represented by formula I: 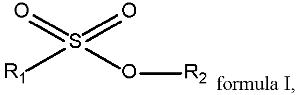 where
R1 and R2 together with sulfur and oxygen to which they are connected form a 4-, 5-, or 6-membered ring, where the ring optionally has a double bond and optionally contains one or two sulfonate ester groups, and hydrogen on the ring is optionally replaced by a halogen or a C₁₋₃ alkyl group.

In this document, the term "C₁₋₃ alkyl group" refers to a straight-chain or branched hydrocarbon chain group consisting only of carbon and hydrogen atoms, where the group has no unsaturation, has one to three carbon atoms, and is attached to the rest of the molecule through a single bond.

In this context, the term "halogen" may refer to F, Cl, Br, or I.

In some embodiments, the sulfonate ester compound includes one or more of 1,3-propane sultone (1,3-PS, 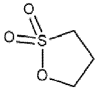 ), 3-fluoro-1,3-propane sultone (FPS, 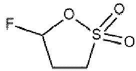 ), 1-methyl-1,3-propane sultone (2,4-BS, 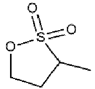 ), 1,4-butane sultone (BS, 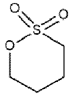 ), 1,4-butenesultone (BST, 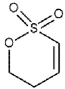 ), 1,3-propene sultone (PES, 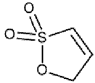 ), and methylene methane disulfonate (MMDS, 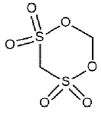 ).

In some embodiments, the sulfonate ester compound includes one or more of 1,3-propane sultone, 1,4-butane sultone, 1,3-propylene sultone, and methylene disulfonate.

In some embodiments, the sulfate ester compound includes one or more of compounds represented by formula II: 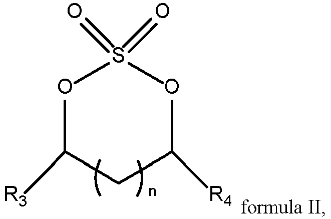 where
n is any integer from 0 to 3, and R₃ and R₄ are each independently selected from hydrogen, fluorine, cyano group, alkenyl group, substituted or unsubstituted C₁₋₆ alkyl group, and

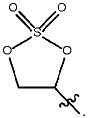

In this context, the term "cyano group" refers to -CN.

In this context, the term "alkenyl group" refers to an unsaturated hydrocarbon group having at least one carbon-carbon double bond.

In this document, the term "C₁₋₆ alkyl group" refers to a straight-chain or branched hydrocarbon chain group consisting only of carbon and hydrogen atoms, where the group has no unsaturation, has one to six carbon atoms, and is attached to the rest of the molecule through a single bond.

In this document, the term "substituted" refers to at least one hydrogen atom of the compound or chemical moiety being replaced by another chemical moiety or a substituent, where the substituent is independently selected from hydroxy group, mercapto group, amino group, cyano group, nitro group, aldehyde group, halogen atom, alkenyl group, alkynyl group, aryl group, heteroaryl group, C₁₋₆ alkyl group, and C₁₋₆ alkoxy group.

In some embodiments, n is 0, so that the carbon atom connected to R3 and the carbon atom connected to R4 are directly connected through a single bond.

In some embodiments, R3 and R4 are each independently selected from hydrogen, fluorine, cyano group, methyl group, ethyl group, n-propyl group, isopropyl group, n-butyl group, isobutyl group, sec-butyl group, vinyl group, propenyl group, and

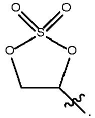

In some embodiments, the sulfate ester compound includes one or more of ethylene sulfate (DTD, 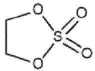 ), 4-methyl-ethylene sulfate (MeDTD, 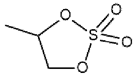 ), 4-fluoroethylene sulfate (FDTD, 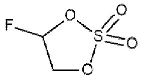 ), 4-n-propylethylene sulfate (PEGLST, 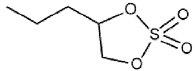 ), 4,4'-diethylene sulfate ( 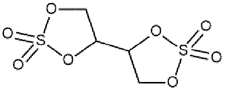 ), 4-vinyl-ethylene sulfate (VDTD, 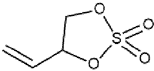 ), 4-ethylethylene sulfate (EtDTD, 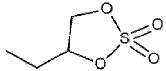 ), 4,5-difluoroethylene sulfate (DFDTD, 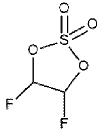 ), and 4-cyanoethylene sulfate (CDTD, 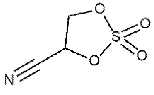 ).

In some embodiments, the sulfate ester compound includes one or two of ethylene sulfate, and 4-methyl-ethylene sulfate.

In some embodiments, based on a total mass of the electrolyte, a mass percentage of the additive is 0.2%-10%. In some embodiments, based on the total mass of the electrolyte, the mass percentage of the additive may optionally be any one of 0.2%-0.5%, 0.2%-1%, 0.2%-1.5%, 0.2%-2%, 0.2%-2.5%, 0.2%-3%, 0.2%-3.5%, 0.2%-4%, 0.2%-4.5%, 0.2%-5%, 0.2%-5.5%, 0.2%-6%, 0.2%-6.5%, 0.2%-7%, 0.2%-7.5%, 0.2%-8%, 0.2%-8.5%, 0.2%-9%, 0.2%-9.5%, 0.2%-10%, 0.5%-1%, 0.5%-1.5%, 0.5%-2%, 0.5%-2.5%, 0.5%-3%, 0.5%-3.5%, 0.5%-4%, 0.5%-4.5%, 0.5%-5%, 0.5%-5.5%, 0.5%-6%, 0.5%-6.5%, 0.5%-7%, 0.5%-7.5%, 0.5%-8%, 0.5%-8.5%, 0.5%-9%, 0.5%-9.5%, 0.5%-10%, 1%-1.5%, 1%-2%, 1%-2.5%, 1%-3%, 1%-3.5%, 1%-4%, 1%-4.5%, 1%-5%, 1%-5.5%, 1%-6%, 1%-6.5%, 1%-7%, 1%-7.5%, 1%-8%, 1%-8.5%, 1%-9%, 1%-9.5%, 1%-10%, 1.5%-2%, 1.5%-2.5%, 1.5%-3%, 1.5%-3.5%, 1.5%-4%, 1.5%-4.5%, 1.5%-5%, 1.5%-5.5%, 1.5%-6%, 1.5%-6.5%, 1.5%7%, 1.5%-7.5%, 1.5%-8%, 1.5%-8.5%, 1.5%-9%, 1.5%-9.5%, 1.5%-10%, 2%-2.5%, 2%-3%, 2%-3.5%, 2%-4%, 2%-4.5%, 2%-5%, 2%-5.5%, 2%-6%, 2%-6.5%, 2%-7%, 2%-7.5%, 2%-8%, 2%-8.5%, 2%-9%, 2%-9.5%, 2%-10%, 2.5%-3%, 2.5%-3.5%, 2.5%-4%, 2.5%-4.5%, 2.5%-5%, 2.5%-5.5%, 2.5%-6%, 2.5%-6.5%, 2.5%-7%, 2.5%-7.5%, 2.5%-8%, 2.5%-8.5%, 2.5%-9%, 2.5%-9.5%, 2.5%-10%, 3%-3.5%, 3%-4%, 3%-4.5%, 3%-5%, 3%-5.5%, 3%-6%, 3%-6.5%, 3%-7%, 3%-7.5%, 3%-8%, 3%-8.5%, 3%-9%, 3%-9.5%, 3%-10%, 3.5%-4%, 3.5%-4.5%, 3.5%-5%, 3.5%-5.5%, 3.5%-6%, 3.5%-6.5%, 3.5%-7%, 3.5%-7.5%, 3.5%-8%, 3.5%-8.5%, 3.5%-9%, 3.5%-9.5%, 3.5%-10%, 4%-4.5%, 4%-5%, 4%-5.5%, 4%-6%, 4%-6.5%, 4%-7%, 4%-7.5%, 4%-8%, 4%-8.5%, 4%-9%, 4%-9.5%, 4%-10%, 4.5%-5%, 4.5%-5.5%, 4.5%-6%, 4.5%-6.5%, 4.5%-7%, 4.5%-7.5%, 4.5%-8%, 4.5%-8.5%, 4.5%-9%, 4.5%-9.5%, 4.5%-10%, 5%-5.5%, 5%-6%, 5%-6.5%, 5%-7%, 5%-7.5%, 5%-8%, 5%-8.5%, 5%-9%, 5%-9.5%, 5%-10%, 5.5%-6%, 5.5%-6.5%, 5.5%-7%, 5.5%-7.5%, 5.5%-8%, 5.5%-8.5%, 5.5%-9%, 5.5%-9.5%, 5.5%-10%, 6%-6.5%, 6%-7%, 6%-7.5%, 6%-8%, 6%-8.5%, 6%-9%, 6%-9.5%, 6%-10%, 6.5%-7%, 6.5%-7.5%, 6.5%-8%, 6.5%-8.5%, 6.5%9%, 6.5%-9.5%, 6.5%-10%, 7%-7.5%, 7%-8%, 7%-8.5%, 7%-9%, 7%-9.5%, 7%-10%, 7.5%-8%, 7.5%-8.5%, 7.5%-9%, 7.5%-9.5%, 7.5%-10%, 8%-8.5%, 8%-9%, 8%-9.5%, 8%-10%, 8.5%-9%, 8.5%-9.5%, 8.5%-10%, 9%-9.5%, 9%-10%, and 9.5%-10%.

When the mass percentage of the additive is within an appropriate range, a structurally uniform and uniformly distributed SEI can be formed on the surface of the negative electrode, while also ensuring that the battery has low interface impedance, making the SEI have excellent sodium ion transport performance. This allows the battery to have excellent room-temperature cycling performance and high-temperature cycling performance, and low high-temperature gas generation, thereby extending the usable temperature range of the battery.

In some embodiments, based on the total mass of the electrolyte, a mass percentage of the additive is 0.3%-6%. In some embodiments, based on the total mass of the electrolyte, the mass percentage of the additive may optionally be any one of 0.3 % - 0.5 %, 0.3 % - 1 %, 0.3 % - 1.5 %, 0.3 % - 2 %, 0.3 % - 2.5 %, 0.3 % - 3 %, 0.3 % - 3.5 %, 0.3 % - 4 %, 0.3 % - 4.5 %, 0.3 % - 5 %, 0.3 % - 5.5 %, 0.3 % - 6 %, 0.5 % - 1 %, 0.5 % - 1.5 %, 0.5 % - 2 %, 0.5 % - 2.5 %, 0.5 % - 3 %, 0.5 % - 3.5 %, 0.5 % - 4 %, 0.5 % - 4.5 %, 0.5 % - 5 %, 0.5 % - 5.5 %, 0.5 % - 6 %, 1 % - 1.5 %, 1 % - 2 %, 1 % - 2.5 %, 1 % - 3 %, 1 % - 3.5 %, 1 % - 4 %, 1 % - 4.5 %, 1 % - 5 %, 1 % *-* 5.5 %, 1 % - 6 %, 1.5 % - 2 %, 1.5 % - 2.5 %, 1.5 % - 3 %, *1.5 %* - 3.5 %, 1.5 % - 4 %, 1.5 % - 4.5 %, 1.5 % - 5 %, 1.5 % - 5.5 %, 1.5 % - 6 %, 2 % - 2.5 %, 2 % - 3 %, 2 % - 3.5 %, 2 % - 4 %, 2 % - 4.5 %, 2 % *-* 5 %, 2 % *-* 5.5 %, 2 % - 6 %, 2.5 % - 3 %, 2.5 % - 3.5 %, 2.5 % - 4 %, 2.5 % - 4.5 %, 2.5 % *-* 5 %, 2.5 % *-* 5.5 %, 2.5 % - 6 %, 3 % - 3.5 %, 3 % - 4 %, 3 % - 4.5 %, 3 % *-* 5 %, 3 % *-* 5.5 %, 3 % - 6 %, 3.5 % - 4 %, 3.5 % - 4.5 %, 3.5 % *-* 5 %, 3.5 % *-* 5.5 %, 3.5 % - 6 %, 4 % - 4.5 %, 4 % - 5 %, 4 % - 5.5 %, 4 % - 6 %, 4.5 % - 5 %, 4.5 % - 5.5 %, 4.5 % - 6 %, 5 % - 5.5 %, and 5%-6%.

When the mass percentage of the additive is within an appropriate range, a structurally uniform and uniformly distributed SEI can be formed on the surface of the negative electrode, while also ensuring that the battery has low interface impedance, making the SEI have excellent sodium ion transport performance. This can further improve the high-temperature cycling performance of the battery, reduce the high-temperature gas generation of the battery, and improve the electrochemical performance and safety performance of the battery at high temperatures.

In some embodiments, the electrolyte further includes a sodium salt and an ether solvent.

In some embodiments, the sodium salt includes one or more of sodium hexafluorophosphate, sodium tetrafluoroborate, sodium hexafluoroarsenate, and sodium trifluoroacetate.

In some embodiments, the ether solvent includes one or more of ethylene glycol dimethyl ether, diethylene glycol dimethyl ether, triethylene glycol dimethyl ether, tetraethylene glycol dimethyl ether, ethylene glycol diethyl ether, ethylene glycol dibutyl ether, tetrahydrofuran, and methyltetrahydrofuran.

In some embodiments, the ether solvent includes one or more of ethylene glycol dimethyl ether, diethylene glycol dimethyl ether, and ethylene glycol diethyl ether.

The molecules of the ether solvent can construct a stable electrode/electrolyte interface on a surface of the negative electrode, forming a stable SEI. This reduces electrochemical polarization, improves the room-temperature cycling performance and high-temperature cycling performance of the battery, alleviates high-temperature gas generation phenomenon of the battery, and improves the electrochemical performance and safety of the battery.

In some embodiments, based on the total mass of the electrolyte, a mass percentage of the sodium salt is 3%-40%. In some embodiments, based on the total mass of the electrolyte, the mass percentage of the sodium salt may optionally be any one of 3%-5%, 3%-10%, 3%-15%, 3%-20%, 3%-25%, 3%-30%, 3%-35%, 3%-40%, 5%-10%, 5%-15%, 5%-20%, 5%-25%, 5%-30%, 5%-35%, 5%-40%, 10%-15%, 10%-20%, 10%-25%, 10%-30%, 10%-35%, 10%-40%, 15%-20%, 15%-25%, 15%-30%, 15%-35%, 15%-40%, 20%-25%, 20%-30%, 20%-35%, 20%-40%, 25%-30%, 25%-35%, 25%-40%, 30%-35%, 30%-40%, and 35%-40%.

When the mass percentage of the sodium salt is within an appropriate range, the electrolyte has suitable viscosity and excellent ionic conductivity, and the battery has excellent room-temperature cycling performance and high-temperature cycling performance, with low high-temperature gas generation, thereby extending the usable temperature range of the battery.

In some embodiments, based on the total mass of the electrolyte, a mass percentage of the sodium salt is 5%-30%. In some embodiments, based on the total mass of the electrolyte, the mass percentage of the sodium salt may optionally be any one of 5%-10%, 5%-15%, 5%-20%, 5%-25%, 5%-30%, 10%-15%, 10%-20%, 10%-25%, 10%-30%, 15%-20%, 15%-25%, 15%-30%, 20%-25%, 20%-30%, and 25%-30%.

When the mass percentage of the sodium salt is within an appropriate range, the electrolyte has suitable viscosity and excellent ionic conductivity, which can improve the room-temperature cycling performance and high-temperature cycling performance of the battery, reduce the high-temperature gas generation of the battery, and improve the electrochemical performance and safety performance of the battery.

In some embodiments, the electrolyte further includes a lithium salt.

In some embodiments, the lithium salt includes one or more of lithium hexafluorophosphate, lithium tetrafluoroborate, lithium perchlorate, lithium hexafluoroarsenate, lithium trifluoroacetate, lithium tetraphenylborate, lithium trifluoromethylsulfonate, lithium bis(oxalatoborate), lithium difluorooxalatoborate, lithium bis(fluorosulfonyl)imide, and lithium bis(trifluoromethylsulfonyl)imide.

Taking a sodium metal battery as an example, the introduction of lithium ions can effectively inhibit the growth of sodium dendrites during the deposition process of sodium metal. During the charging process of a sodium metal battery, an electrochemical reaction occurs at the negative electrode where sodium ions gain electrons and are reduced to sodium metal. At the initial stage of the reaction, sodium metal deposits unevenly on the surface of the current collector, forming dendrites. The tips of these dendrites have a higher negative charge density due to the tip effect. Both lithium ions and sodium ions are monovalent cations, each carrying one unit of positive charge. However, lithium ions have a smaller radius and therefore have a higher positive charge density. Lithium ions will distribute at the tips of the dendrites before sodium ions, effectively reducing the continued deposition of sodium ions at the tips of sodium dendrites, inhibiting the growth of sodium dendrites, and thus greatly improving the cycling performance of the battery.

When the electrolyte includes a lithium salt, the room-temperature cycling performance and high-temperature cycling performance of the battery can be improved, the high-temperature gas generation phenomenon of the battery can be alleviated, and the electrochemical performance and safety performance of the battery can be improved.

### [Sodium secondary battery]

This application provides a sodium secondary battery, where the sodium secondary battery includes the electrolyte in any embodiment.

In some embodiments, the sodium secondary battery includes a negative electrode plate, the negative electrode plate including a negative electrode current collector and a primer coating formed on at least one side of the negative electrode current collector, and
the sodium secondary battery satisfies the following relational expression: 0.1 ≤ Z - 0.01 X ≤ 5, where
X g/m² is the surface density of the primer coating, and Z% is the mass percentage of the additive based on the total mass of the electrolyte.

In this document, the term "primer coating on at least one side of the negative electrode current collector" refers to a primer coating applied to one or two sides of the current collector. The primer coating may be in direct contact with the current collector, meaning there are no other structures between the current collector and the primer coating, or the primer coating may not be in direct contact with the current collector, meaning there are other structures between the current collector and the primer coating.

The primer coating has the characteristic of low metal nucleation potential, which can effectively improve the deposition/dissolution performance of the metal. It can also mitigate the large volume changes of the battery cell brought about by the metal deposition/dissolution process, stabilizing the battery cell structure. This can improve the room-temperature cycling performance and high-temperature cycling performance of the battery, alleviate the high-temperature gas generation phenomenon of the battery, and improve the electrochemical performance and safety performance of the battery.

Taking the metal battery with no negative electrode as an example, during the first charging process, the additive first undergoes reduction decomposition on the primer coating on the surface of the current collector, and some decomposition products deposit on the primer coating to form the SEI. During discharge, the metallic sodium can convert back to sodium ions and return to the positive electrode, implementing cyclic charge and discharge.

The applicant unexpectedly found that through the controlling of the surface density X g/m² of the primer coating in the secondary battery and the mass percentage Z% of the additive based on the total mass of the electrolyte within the numerical range of 0.1 ≤ Z - 0.01X ≤ 5, the stability and uniformity of the SEI can be improved by the synergistic effect of the primer coating and the additive, thereby enhancing the high-temperature cycling performance of the battery, alleviating the high-temperature gas generation phenomenon of the battery, and extending the usable temperature range of the battery.

In some embodiments, the sodium secondary battery includes a negative electrode plate, the negative electrode plate including a negative electrode current collector and a primer coating formed on at least one side of the negative electrode current collector, and
the sodium secondary battery satisfies any one of the following relational expressions: 0.1 ≤ Z - 0.01X ≤ 0.5, 0.1 ≤ Z - 0.01X ≤ 1, 0.1 ≤ Z - 0.01X ≤ 1.5, 0.1 ≤ Z - 0.01X ≤ 2, 0.1 ≤ Z - 0.01X ≤ 2.5, 0.1 ≤ Z - 0.01X ≤ 3, 0.1 ≤ Z - 0.01X ≤ 3.5, 0.1 ≤ Z - 0.01X ≤ 4, 0.1 ≤ Z - 0.01X ≤ 4.5, 0.1 ≤ Z - 0.01X ≤ 5, 0.5 ≤ Z - 0.01X ≤ 1, 0.5 ≤ Z - 0.01X ≤ 1.5, 0.5 ≤ Z - 0.01X ≤ 2, 0.5 ≤ Z - 0.01X ≤ 2.5, 0.5 ≤ Z - 0.01X ≤ 3, 0.5 ≤ Z - 0.01X ≤ 3.5, 0.5 ≤ Z - 0.01X ≤ 4, 0.5 ≤ Z - 0.01X ≤ 4.5, 0.5 ≤ Z - 0.01X ≤ 5, 1 ≤ Z - 0.01X ≤ 1.5, 1 ≤ Z - 0.01X ≤ 2, 1 ≤ Z - 0.01X ≤ 2.5, 1 ≤ Z - 0.01X ≤ 3, 1 ≤ Z - 0.01X ≤ 3.5, 1 ≤ Z - 0.01X ≤ 4, 1 ≤ Z - 0.01X ≤ 4.5, 1 ≤ Z - 0.01X ≤ 5, 1.5 ≤ Z - 0.01X ≤ 2, 1.5 ≤ Z - 0.01X ≤ 2.5, 1.5 ≤ Z - 0.01X ≤ 3, 1.5 ≤ Z - 0.01X ≤ 3.5, 1.5 ≤ Z - 0.01X ≤ 4, 1.5 ≤ Z - 0.01X ≤ 4.5, 1.5 ≤ Z - 0.01X ≤ 5, 2 ≤ Z - 0.01X ≤ 2.5, 2 ≤ Z - 0.01X ≤ 3, 2 ≤ Z - 0.01X ≤ 3.5, 2 ≤ Z - 0.01X ≤ 4, 2 ≤ Z - 0.01X ≤ 4.5, 2 ≤ Z - 0.01X ≤ 5, 2.5 ≤ Z - 0.01X ≤ 3, 2.5 ≤ Z - 0.01X ≤ 3.5, 2.5 ≤ Z - 0.01X ≤ 4, 2.5 ≤ Z - 0.01X ≤ 4.5, 2.5 ≤ Z - 0.01X ≤ 5, 3 ≤ Z - 0.01X ≤ 3.5, 3 ≤ Z - 0.01X ≤ 4, 3 ≤ Z - 0.01X ≤ 4.5, 3 ≤ Z - 0.01X ≤ 5, 3.5 ≤ Z - 0.01X ≤ 4, 3.5 ≤ Z - 0.01X ≤ 4.5, 3.5 ≤ Z - 0.01X ≤ 5, 4 ≤ Z - 0.01X ≤ 4.5, 4 ≤ Z - 0.01X ≤ 5, and 4.5 ≤ Z - 0.01X ≤ 5, where
X g/m² is the surface density of the primer coating, and Z% is the mass percentage of the additive based on the total mass of the electrolyte.

In some embodiments, the sodium secondary battery includes the negative electrode plate, the negative electrode plate including the negative electrode current collector and the primer coating formed on at least one side of the negative electrode current collector, the electrolyte includes a lithium salt, and the sodium secondary battery satisfies the following relational expression: 0.84 ≤ Y - 0.01X ≤ 5.84, where
X g/m² is the surface density of the primer coating, and Y% is the mass percentage of the lithium salt based on the total mass of the electrolyte.

In some embodiments, the sodium secondary battery includes the negative electrode plate, the negative electrode plate includes the negative electrode current collector and the primer coating formed on at least one side of the negative electrode current collector, the electrolyte includes the lithium salt, and the sodium secondary battery satisfies any one of the following relational expressions: 0.84 ≤ Y - 0.01 X ≤ 5.84, 0.84 ≤ Y - 0.01 X ≤ 1.84, 0.84 ≤ Y - 0.01 X ≤ 2.84, 0.84 ≤ Y - 0.01 X ≤ 3.84, 0.84 ≤ Y - 0.01 X ≤ 4.84, 0.84 ≤ Y - 0.01 X ≤ 5.84, 1.84 ≤ Y - 0.01 X ≤ 2.84, 1.84 ≤ Y - 0.01 X ≤ 3.84, 1.84 ≤ Y - 0.01 X ≤ 4.84, 1.84 ≤ Y - 0.01 X ≤ 5.84, 2.84 ≤ Y - 0.01 X ≤ 3.84, 2.84 ≤ Y - 0.01 X ≤ 4.84, 2.84 ≤ Y - 0.01 X ≤ 5.84, 3.84 ≤ Y - 0.01 X ≤ 4.84, 3.84 ≤ Y - 0.01 X ≤ 5.84, 4.84 ≤ Y - 0.01 X ≤ 5.84, 0.84 ≤ Y - 0.01 X ≤ 1.5, 0.84 ≤ Y - 0.01 X ≤ 2, 0.84 ≤ Y - 0.01 X ≤ 2.5, 0.84 ≤ Y - 0.01 X ≤ 3, 0.84 ≤ Y- 0.01 X ≤ 3.5, 0.84 ≤ Y - 0.01 X ≤ 4, 0.84 ≤ Y - 0.01 X ≤ 4.5, 0.84 ≤ Y - 0.01 X ≤ 5, 1.84 ≤ Y - 0.01 X ≤ 5.5, 1.5 ≤ Y - 0.01 X ≤ 2, 1.5 ≤ Y - 0.01 X ≤ 2.5, 1.5 ≤ Y - 0.01 X ≤ 3, 1.5 ≤ Y - 0.01 X ≤ 3.5, 1.5 ≤ Y - 0.01 X ≤ 4, 1.5 ≤ Y - 0.01 X ≤ 4.5, 1.5 ≤ Y - 0.01 X ≤ 5, 1.5 ≤ Y - 0.01 X ≤ 5.5, 2 ≤ Y - 0.01 X ≤ 2.5, 2 ≤ Y - 0.01 X ≤ 3, 2 ≤ Y - 0.01 X ≤ 3.5, 2 ≤ Y - 0.01 X ≤ 4, 2 ≤ Y - 0.01 X ≤ 4.5, 2 ≤ Y - 0.01 X ≤ 5, 2 ≤ Y - 0.01 X ≤ 5.5, 2.5 ≤ Y - 0.01 X ≤ 3, 2.5 ≤ Y - 0.01 X ≤ 3.5, 2.5 ≤ Y - 0.01 X ≤ 4, 2.5 ≤ Y - 0.01 X ≤ 4.5, 2.5 ≤ Y - 0.01 X ≤ 5, 2.5 ≤ Y - 0.01 X ≤ 5.5, 3 ≤ Y - 0.01 X ≤ 3.5, 3 ≤ Y - 0.01 X ≤ 4, 3 ≤ Y - 0.01 X ≤ 4.5, 3 ≤ Y - 0.01 X ≤ 5, 3 ≤ Y - 0.01 X ≤ 5.5, 3.5 ≤ Y - 0.01 X ≤ 4, 3.5 ≤ Y - 0.01 X ≤ 4.5, 3.5 ≤ Y - 0.01 X ≤ 5, 3.5 ≤ Y - 0.01 X ≤ 5.5, 4 ≤ Y - 0.01 X ≤ 4.5, 4 ≤ Y - 0.01 X ≤ 5, 4 ≤ Y - 0.01 X ≤ 5.5, 4.5 ≤ Y - 0.01 X ≤ 5, 4.5 ≤ Y - 0.01 X ≤ 5.5, and 5 ≤ Y - 0.01 X ≤ 5.5, where
X g/m² is the surface density of the primer coating, and Y% is the mass percentage of the lithium salt based on the total mass of the electrolyte.

The primer coating containing free electrons electrostatically adsorb lithium ions with a higher positive charge density. The lithium ions pass through the SEI layer and deposit on the primer coating, effectively reducing the overpotential for sodium metal deposition, inhibiting the formation of sodium dendrites, and facilitating the improvement of the cycling performance of the battery.

The applicant unexpectedly found that through the controlling of the surface density X g/m² of the primer coating in the secondary battery and the mass percentage Y% of the lithium salt based on the total mass of the electrolyte within the numerical range of 0.84 ≤ Y - 0.01 X ≤ 5.84, the stability and uniformity of the SEI can be improved by the synergistic effect of the primer coating and the lithium salt, thereby enhancing the room-temperature cycling performance and high-temperature cycling performance of the battery, alleviating the high-temperature gas generation phenomenon of the battery, and improving the electrochemical performance and safety performance of the battery.

In some embodiments, the surface density of the primer coating is 5 g/m² - 50 g/m².

In some embodiments, the surface density of the primer coating may optionally be any one of 5 g/m² - 10 g/m², 5 g/m² - 20 g/m², 5 g/m² - 30 g/m², 5 g/m² - 40 g/m², 5 g/m² - 50 g/m², 10 g/m² - 20 g/m², 10 g/m² - 30 g/m², 10 g/m² - 40 g/m², 10 g/m² - 50 g/m², 20 g/m² - 30 g/m², 20 g/m² - 40 g/m², 20 g/m² - 50 g/m², 30 g/m² - 40 g/m², 30 g/m² - 50 g/m², and 40 g/m² - 50 g/m².

An appropriate range of primer coating surface density enhances the room-temperature cycling performance and high-temperature cycling performance of the battery, and alleviates the high-temperature gas generation phenomenon of the battery. At the same time, an appropriate range of the primer coating surface density can increase the energy density of the battery, satisfying the usage requirements of the battery.

In some embodiments, the primer coating includes one or more of carbon coating, alloy coating, and metal oxide coating.

In some embodiments, the primer coating includes carbon coating.

In some embodiments, the primer coating contains one or more of super conductive carbon black, Ketjen black, acetylene black, carbon nanotubes, and graphene.

In some embodiments, the primer coating includes a binder, where the binder includes any one of polyvinylidene fluoride, sodium carboxymethyl cellulose, styrene-butadiene rubber, sodium alginate, lithium/sodium polyacrylate, polytetrafluoroethylene, polyimide, and polyurethane.

In some embodiments, the primer coating is a metallic coating, where the metal has a body-centered cubic structure. The metal includes any one of α-Fe, V, Nb, Cr, Mo, Ta, and W.

In some embodiments, the primer coating is an alloy coating, where the alloy includes an alloy composed of any one or more metals of Au, Ag, Sn, and Sb.

In some embodiments, the primer coating is a metal oxide coating, where the oxide includes at least one of copper oxide and aluminum oxide.

In some embodiments, the primer coating is a conductive polymer coating, where the conductive polymer includes any one of polyaniline, polythiophene, polypyrrole, and polyphenylacetylene.

In some embodiments, the primer coating is a conductive ceramic coating, where the conductive ceramic material includes at least one of TiB₂, TiC, and B4C₃.

In some embodiments, the primer coating is a conductive carbon coating, where the conductive carbon includes at least one of conductive carbon black, graphite, carbon fibers, single-walled carbon nanotubes, multi-walled carbon nanotubes, graphene, and fullerene.

In some embodiments, the sodium secondary battery is a sodium metal battery with no negative electrode.

In some embodiments, the sodium secondary battery is a sodium metal battery with no negative electrode. The sodium metal battery with no negative electrode does not use a negative electrode active material. Instead, it solely uses a negative electrode current collector as the negative electrode. During the initial charging process, sodium deposition occurs on the negative electrode, and during discharge, sodium returns to the positive electrode, realizing a charge and discharge cycle. Due to the absence of a negative electrode material and the use of only a negative electrode current collector, a sodium metal battery with no negative electrode can effectively overcome the drawbacks of a sodium metal battery and achieve a higher energy density compared to a battery with a metal sodium negative electrode.

When the sodium secondary battery is a sodium metal battery with no negative electrode, the room-temperature cycling performance and high-temperature cycling performance of the battery can be improved, the high-temperature gas generation phenomenon of the battery can be alleviated, and the electrochemical performance and safety performance of the battery in high temperatures can be improved.

In some embodiments, a CB value of the sodium metal battery with no negative electrode is less than or equal to 0.1.

The CB value is the unit area capacity of the negative electrode plate in the sodium secondary battery divided by the unit area capacity of the positive electrode plate in the sodium secondary battery. Since a sodium metal battery with no negative electrode does not contain a negative electrode active material, the unit area capacity of the negative electrode plate is relatively small, and the CB value of the secondary battery is less than or equal to 0.1.

In some embodiments, the negative electrode current collector used in the negative electrode plate includes at least one of metal foil current collector, metal foam current collector, metal mesh current collector, carbon felt current collector, carbon cloth current collector, and carbon paper current collector. Sodium ions do not form an alloy with aluminum. Based on cost reduction and weight reduction considerations, a sodium secondary battery preferably uses an aluminum-based current collector. The aluminum-based current collector is any one of aluminum foil, aluminum alloy foil, and aluminum-based composite current collector. The aluminum-based composite current collector includes a polymer base film and aluminum foil and/or aluminum alloy foil formed on two sides of the polymer base film. Specifically, the aluminum-based composite current collector has a "sandwich" structure, with the polymer base film in the middle, and aluminum foil on two sides, or aluminum alloy foil on two sides. It can also have aluminum foil on one side of the polymer base film and aluminum alloy foil on another side. The polymer base film is any one of polyamide, polyethylene terephthalate, polyimide, polyethylene, polypropylene, polystyrene, polyvinyl chloride, acrylonitrile-butadiene-styrene copolymer, polybutylene terephthalate, poly(p-phenylene terephthalamide), polybutylene, polyoxymethylene, epoxy resin, phenolic resin, polytetrafluoroethylene, polyvinylidene fluoride, silicon rubber, and polycarbonate.

### [Positive electrode plate]

In some embodiments, the positive electrode plate includes a positive electrode current collector and a positive electrode active material layer formed on at least part of a surface of the positive electrode current collector, where the positive electrode active material layer includes a positive electrode active material, and the positive electrode active material may include at least one of a layered transition metal oxide, a polyanionic compound, and a Prussian blue compound.

The transition metal in the layered transition metal oxide may be at least one of Mn, Fe, Ni, Co, Cr, Cu, Ti, Zn, V, Zr, and Ce. Optionally, the layered transition metal oxide is, for example, NaxMO₂, where m is one or more of Ti, V, Mn, Co, Ni, Fe, Cr, and Cu, and 0 < x ≤ 1.

The polyanionic compound may be a compound having a metal ion, a transition metal ion, and a tetrahedral (YO₄)ⁿ⁻ anion unit. The metal ion may optionally be one of sodium ion, lithium ion, potassium ion, and zinc ion. The transition metal may optionally be at least one of Mn, Fe, Ni, Co, Cr, Cu, Ti, Zn, V, Zr, and Ce; and Y may optionally be at least one of P, S, and Si; where n represents a valence state of (YO₄)ⁿ⁻.

The Prussian blue compound may be a compound with sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0<a≤2, 0<b<1, and 0<c<1.

The positive electrode active material layer may further include a conductive agent to improve the conductivity of the positive electrode. The conductive agent can be one or more of Super P, acetylene black, carbon black, Ketjen black, carbon dot, carbon nanotube, graphite, graphene, and carbon nanofiber.

The positive electrode active material layer may further include a binder to firmly bind a positive electrode active material and an optional conductive agent onto the positive electrode current collector. The binder may optionally be at least one of polyvinylidene fluoride (PVDF), polytetrafluoroethylene (PTFE), polyacrylic acid (PAA), polyvinyl alcohol (PVA), ethylene vinyl acetate (EVA), styrene-butadiene rubber (SBR), carboxymethyl cellulose (CMC), sodium alginate (SA), polymethacrylic acid (PMA), and carboxymethyl chitosan (CMCS).

The positive electrode current collector can be a conductive carbon sheet, metal foil, carbon-coated metal foil, porous metal plate, or composite current collector. Optionally, the conductive carbon material of the conductive carbon sheet can be one or more of Super P, carbon black, Keqin black, carbon dots, carbon nanotubes, graphite, graphene and carbon nanofibers; the metal materials of the metal foil, carbon-coated metal foil, and porous metal plate are each independently selected from at least one of copper, aluminum, nickel, and stainless steel; and the composite current collector can be a composite current collector formed by combining a polymer film and a metal foil.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Separator]

In some embodiments, the sodium secondary battery further includes a separator. The separator is not limited to any particular type in this application, and may be any well-known porous separator with good chemical stability and mechanical stability.

In some embodiments, a material of the separator can be selected from at least one of polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the sodium secondary battery may include an outer package. The outer package may be used for packaging the electrode assembly and the electrolyte.

In some embodiments, the outer package of the sodium secondary battery may be a hard shell, for example, a hard plastic shell, an aluminum shell, or a steel shell. The outer package of the sodium secondary battery may alternatively be a soft pack, for example, a soft pouch. Material of the soft pack may be plastic, which, for example, may be polypropylene, polybutylene terephthalate, and polybutylene succinate.

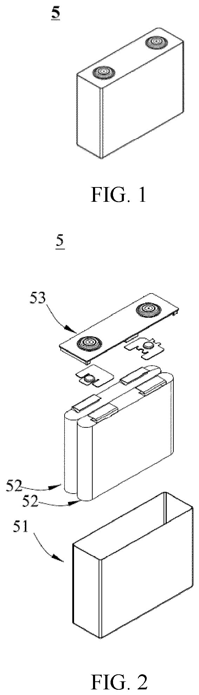

This application does not impose any special limitations on a shape of the sodium secondary battery, and the sodium secondary battery may be cylindrical, rectangular, or of any other shapes. For example, FIG. 1 shows a sodium secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates into the electrode assembly 52. There may be one or more electrode assemblies 52 in the sodium secondary battery 5, and persons skilled in the art may make choices according to actual requirements.

In some embodiments, the sodium secondary battery may be assembled into a battery module, and the battery module may include one or more sodium secondary batteries. The specific quantity may be chosen by persons skilled in the art according to use and capacity of the battery module.

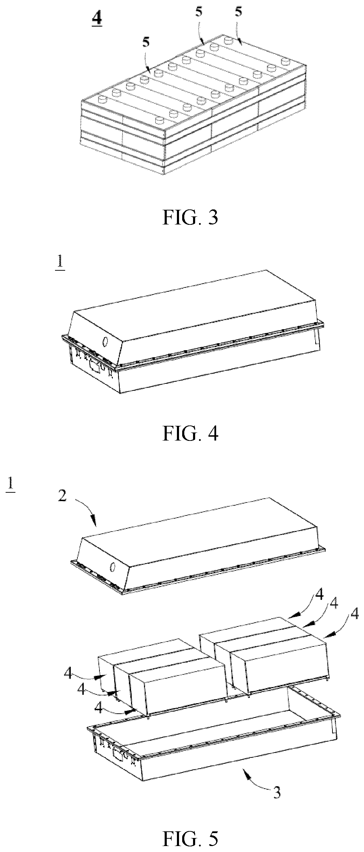

FIG. 3 shows a battery module 4 as an example. Referring to FIG. 3, in the battery module 4, a plurality of sodium secondary batteries 5 may be sequentially arranged in a length direction of the battery module 4. Certainly, the secondary batteries may alternatively be arranged in any other manners. Further, the plurality of sodium secondary batteries 5 may be fastened by using fasteners.

Optionally, the battery module 4 may further include an enclosure with an accommodating space, and the plurality of sodium secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric device, where the electric device includes at least one of the sodium secondary battery, the battery module, or the battery pack provided in this application. The sodium secondary battery, the battery module, or the battery pack may be used as a power source for the electric device or an energy storage unit of the electric device. The electric device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The sodium secondary battery, battery module, or battery pack may be selected for the electric device based on requirements for using the electric device.

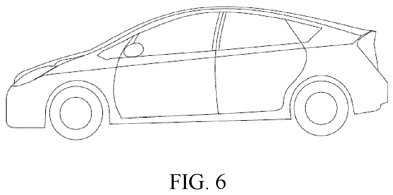

FIG. 6 shows an electric device as an example. This electric device is a battery electric vehicle, a hybrid electric vehicle, a plug-in hybrid electric vehicle, or the like. To satisfy a requirement for high power and high energy density of the sodium secondary battery of the electric device, a battery pack or a battery module may be used.

In another example, the apparatus may be a mobile phone, a tablet computer, a notebook computer, or the like. Such apparatus is generally required to be light and thin and may use a sodium secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. In the following embodiments, only a case in which the secondary battery is a sodium ion battery is shown, but this application is not limited thereto.

### I. Preparation method

### Example 1

### (1) Preparation of electrolyte

In an argon atmosphere glove box with a water content < 10 ppm, a sodium salt sodium hexafluorophosphate, a lithium salt lithium hexafluorophosphate, and an additive 1,3-propane sultone were added to an ethylene glycol dimethyl ether solvent, where based on a total mass of the electrolyte, a mass percentage of the sodium hexafluorophosphate was 15%, a mass percentage of the lithium hexafluorophosphate was 3%, and a mass percentage of the 1,3-propane sultone was 1%.

### (2) Preparation of positive electrode plate

A positive electrode active material Na₃V₂(PO₄)₃, a binder polyvinylidene fluoride (PVDF), and a conductive agent conductive carbon black (Super-P) were mixed in an N-methylpyrrolidone (NMP) solvent to uniformity at a mass ratio of 96%:2%:2% to prepare a positive electrode slurry. Using an extrusion coater, the positive electrode slurry was applied to a surface of aluminum foil according to the unit area mass requirements of the positive electrode active material, followed by drying. The coated electrode plate was then cold-pressed at a designed compacted density of 2.5 g/cm³ by using a cold presser to obtain the final positive electrode plate.

### (3) Preparation of negative electrode plate

Carbon nanotubes and sodium alginate were added to deionized water and stirred to form a uniform slurry. The slurry was applied to a negative electrode current collector of aluminum foil, followed by drying and cutting to obtain a negative electrode plate with no negative electrode structure, where a surface density of the primer coating was 20 g/m².

### (4) Separator

A polyethylene film (PE separator) was used as the separator.

### (5) Preparation of battery

The positive electrode plate, the separator, and the negative electrode plate were stacked in sequence so that the separator was sandwiched between the positive electrode plate and the negative electrode plate for separation, and the electrolyte was added to assemble a button cell.

### Examples 2-32

Except for differences in the electrolyte formulation and/or the preparation parameters of the negative electrode plate, the other steps of Examples 2 to 32 were the same as the steps of Example 1. The methods for preparing the negative electrode plates in Examples 26 and 27 are as follows, with the specific parameters shown in Tables 1 and 2.

Example 26: Carbon nanotubes and sodium alginate were added to deionized water and stirred to form a uniform slurry. The slurry was applied to the negative electrode current collector of aluminum foil, followed by drying and cutting to obtain a negative electrode current collector with a primer coating, where a surface density of the primer coating was 20 g/m². A negative electrode active material hard carbon, a conductive agent acetylene black, a binder styrene-butadiene rubber (SBCs), and a thickener carboxymethyl cellulose (CMC) were mixed at a weight ratio of 90:5:4:1 in an appropriate amount of deionized water and fully stirred to form a uniform negative electrode slurry. The negative electrode slurry was applied to the negative electrode current collector with the primer coating, followed by drying at 100°C and pressing to obtain the negative electrode plate.

Example 27: The negative electrode plate was aluminum foil.

### Comparative Examples 1 to 5

Except for differences in the electrolyte formulation and/or the preparation parameters of the negative electrode plate, the other steps of Comparative Examples 1 to 5 were the same as the steps of Example 1. The method for preparing the negative electrode plate in Comparative Example 4 was the same as the method for preparing the negative electrode plate in Example 26, and the method for preparing the negative electrode plate in Comparative Example 5 was the same as the method for preparing the negative electrode plate in Example 27, with the specific parameters shown in Tables 1 and 2.

### II. Battery performance test

### (1) Room-temperature cycling performance

At 25°C and normal pressure (0.1 MPa), the battery was charged at a constant current of 0.5C to a voltage of 3.5V, and then discharged at a constant current of 1C to a voltage of 3.2V. This was one charge and discharge cycle. The first discharge capacity was taken as 100%. The charge and discharge cycle was repeated 500 times, and then the test was stopped. The cycling capacity retention rate was recorded, and the room-temperature capacity retention rate was used as an indicator to evaluate the room-temperature cycling performance of the battery.

### (2) High-temperature cycling performance

At 60°C and normal pressure (0.1 MPa), the battery was charged at a constant current of 0.5C to a voltage of 3.5V, and then discharged at a constant current of 1C to a voltage of 3.2V. This was one charge and discharge cycle. The first discharge capacity was taken as 100%. The charge and discharge cycle was repeated 500 times, then the test was stopped. The cycling capacity retention rate was recorded, and the high-temperature capacity retention rate was used as an indicator to evaluate the high-temperature cycling performance of the battery.

### (3) High-temperature gas generation performance

At room temperature (25°C), the battery was charged at a constant current of 0.5C to 3.5V. After the battery was fully charged, an initial volume of the battery was measured using a water displacement method. The battery was stored in an oven at 60°C for 24 days and then taken out. The battery was left standing at room temperature for 60 minutes. The volume of the battery was measured using the water displacement method within 60 minutes after the battery was cooled to room temperature. Using the battery volume measured before storage as the reference, the battery volume swelling rate was calculated. The volume swelling rate of the battery after 24 days of storage at 60°C (%) = (battery volume measured after storage/battery volume measured before storage) - 1.

The testing procedures of the comparative examples and other examples are the same as above.

### III. Test results

Test results of the examples and comparative examples are shown in Tables 1 and 2.

**Table 1 Preparation parameters of examples and comparative examples**

| No. | Sodium salt | | Lithium salt | | Additive | | Solvent | Primer coating surface density X/(g/m²) |
|---|---|---|---|---|---|---|---|---|
| | Name | Mass percentage | Name | Y | Name | Z | Name | |
| Example 1 | NaPF₆ | 15% | LiPF₆ | 3 | 1,3-Propane sultone | 1 | Dimethoxyethane | 20 |
| Example 2 | NaPF₆ | 3% | LiPF₆ | 3 | 1,3-Propane sultone | 1 | Dimethoxyethane | 20 |
| Example 3 | NaPF₆ | 5% | LiPF₆ | 3 | 1,3-Propane sultone | 1 | Dimethoxyethane | 20 |
| Example 4 | NaPF₆ | 30% | LiPF₆ | 3 | 1,3-Propane sultone | 1 | Dimethoxyethane | 20 |
| Example 5 | NaPF₆ | 40% | LiPF₆ | 3 | 1,3-Propane sultone | 1 | Dimethoxyethane | 20 |
| Example 6 | NaBF₄ | 15% | LiPF₆ | 3 | 1,3-Propanesulfonate lactone | 1 | Dimethoxyethane | 20 |
| Example 7 | NaPF₆ | 15% | LiPF₆ | 3 | 1,3-Propane sultone | 1 | Diethylene glycol dimethyl ether | 20 |
| Example 8 | NaPF₆ | 15% | LiPF₆ | 3 | 1,3-Propane sultone | 1 | Ethylene glycol diethyl ether | 20 |
| Example 9 | NaPF₆ | 15% | LiPF₆ | 3 | 1,3-Propane sultone | 1 | Dimethyl carbonate | 20 |
| Example 10 | NaPF₆ | 15% | / | / | 1,3-Propane sultone | 1 | Dimethoxyethane | 20 |
| Example 11 | NaPF₆ | 15% | LiODFB | 3 | 1,3-Propane sultone | 1 | Dimethoxyethane | 20 |
| Example 12 | NaPF₆ | 15% | LiFSI | 3 | 1,3-Propane sultone | 1 | Dimethoxyethane | 20 |
| Example 13 | NaPF₆ | 15% | LiPF₆ | 3 | 1,4-Butane sultone | 1 | Dimethoxyethane | 20 |
| Example 14 | NaPF₆ | 15% | LiPF₆ | 3 | 1,3-Propene sultone | 1 | Dimethoxyethane | 20 |
| Example 15 | NaPF₆ | 15% | LiPF₆ | 3 | Methylene disulfonate | 1 | Dimethoxyethane | 20 |
| Example 16 | NaPF₆ | 15% | LLPF₆ | 3 | Ethylene sulfate | 1 | Dimethoxyethane | 20 |
| Example 17 | NaPF₆ | 15% | LiPF₆ | 3 | 4-Methyl-ethylene sulfate | 1 | Dimethoxyethane | 20 |
| Example 18 | NaPF₆ | 15% | LiPF₆ | 1.04 | 1,3-Propane sultone | 1 | Dimethoxyethane | 20 |
| Example 19 | NaPF₆ | 15% | LiPF₆ | 6.04 | 1,3-Propane sultone | 1 | Dimethoxyethane | 20 |
| Example 20 | NaPF₆ | 15% | LiPF₆ | 0.7 | 1,3-Propane sultone | 1 | Dimethoxyethane | 20 |
| Example 21 | NaPF₆ | 15% | LiPF₆ | 6.7 | 1,3-Propane sultone | 1 | Dimethoxyethane | 20 |
| Example 22 | NaPF₆ | 15% | LiPF₆ | 2.85 | 1,3-Propane sultone | 1 | Dimethoxyethane | 5 |
| Example 23 | NaPF₆ | 15% | LiPF₆ | 3.3 | 1,3-Propane sultone | 1 | Dimethoxyethane | 50 |
| Example 24 | NaPF₆ | 15% | LiPF₆ | 2.82 | 1,3-Propane sultone | 1 | Dimethoxyethane | 2 |
| Example 25 | NaPF₆ | 15% | LiPF₆ | 3.4 | 1,3-Propane sultone | 1 | Dimethoxyethane | 60 |
| Example 26 | NaPF₆ | 15% | LiPF₆ | 3 | 1,3-Propane sultone | 1 | Dimethoxyethane | 20+ hard carbon negative electrode active layer |
| Example 27 | NaPF₆ | 15% | LiPF₆ | 3 | 1,3-Propane sultone | 1 | Dimethoxyethane | / |
| Example 28 | NaPF₆ | 15% | LiPF₆ | 3 | 1,3-Propane sultone | 0.3 | Dimethoxyethane | 20 |
| Example 29 | NaPF₆ | 15% | LiPF₆ | 3 | 1,3-Propane sultone | 5.2 | Dimethoxyethane | 20 |
| Example 30 | NaPF₆ | 15% | LiPF₆ | 3 | 1,3-Propane sultone | 0.2 | Dimethoxyethane | 20 |
| Example 31 | NaPF₆ | 15% | LiPF₆ | 3 | 1,3-Propane sultone | 6 | Dimethoxyethane | 20 |
| Example 32 | NaPF₆ | 15% | LiPF₆ | 3 | 1,3-Propane sultone | 10 | Dimethoxyethane | 20 |
| Comparative Example 1 | NaPF₆ | 15% | LiPF₆ | 3 | / | / | Dimethoxyethane | 20 |
| Comparative Example 2 | NaPF₆ | 15% | / | / | / | / | Dimethoxyethane | 20 |
| Comparative Example 3 | NaPF₆ | 15% | LiPF₆ | 3 | / | / | Dimethyl carbonate | 20 |
| Comparative Example 4 | NaPF₆ | 15% | LiPF₆ | 3 | / | / | Dimethoxyethane | 20+ hard carbon negative electrode active layer |
| Comparative Example 5 | NaPF₆ | 15% | LiPF₆ | 3 | / | / | Dimethoxyethane | / |

**Table 2 Performance parameters of examples and comparative examples**

| No. | Y-0.01X | Z-0.01X | Battery performance | | |
|---|---|---|---|---|---|
| | | | Room-temperature capacity retention rate | High-temperature capacity retention rate | High-temperature thickness swelling rate |
| Example 1 | 2.8 | 0.8 | 92.61% | 87.67% | 0.26% |
| Example 2 | 2.8 | 0.8 | 81.36% | 76.33% | 0.76% |
| Example 3 | 2.8 | 0.8 | 86.54% | 81.37% | 0.65% |
| Example 4 | 2.8 | 0.8 | 86.93% | 81.62% | 0.63% |
| Example 5 | 2.8 | 0.8 | 82.03% | 75.31% | 0.81% |
| Example 6 | 2.8 | 0.8 | 89.17% | 84.06% | 0.59% |
| Example 7 | 2.8 | 0.8 | 92.06% | 85.09% | 0.42% |
| Example 8 | 2.8 | 0.8 | 92.31% | 86.97% | 0.36% |
| Example 9 | 2.8 | 0.8 | 54.63% | 0% | 3.29% |
| Example 10 | / | 0.8 | 81.26% | 76.24% | 0.79% |
| Example 11 | 2.8 | 0.8 | 90.77% | 85.03% | 0.42% |
| Example 12 | 2.8 | 0.8 | 90.24% | 84.91% | 0.46% |
| Example 13 | 2.8 | 0.8 | 91.25% | 85.35% | 0.40% |
| Example 14 | 2.8 | 0.8 | 91.75% | 85.65% | 0.38% |
| Example 15 | 2.8 | 0.8 | 90.06% | 84.01% | 0.48% |
| Example 16 | 2.8 | 0.8 | 91.62% | 85.39% | 0.40% |
| Example 17 | 2.8 | 0.8 | 90.34% | 84.21% | 0.47% |
| Example 18 | 0.84 | 0.8 | 86.22% | 80.06% | 0.68% |
| Example 19 | 5.84 | 0.8 | 88.31% | 81.39% | 0.65% |
| Example 20 | 0.5 | 0.8 | 76.22% | 71.62% | 0.89% |
| Example 21 | 6.5 | 0.8 | 78.31% | 72.06% | 0.86% |
| Example 22 | 2.8 | 0.95 | 89.31% | 83.02% | 0.60% |
| Example 23 | 2.8 | 0.5 | 88.26% | 80.16% | 0.68% |
| Example 24 | 2.8 | 0.98 | 82.31% | 77.21% | 0.73% |
| Example 25 | 2.8 | 0.4 | 80.33% | 74.29% | 0.79% |
| Example 26 | 2.8 | 0.8 | 88.06% | 83.26% | 0.59% |
| Example 27 | / | / | 74.03% | 61.21% | 1.02% |
| Example 28 | 2.8 | 0.1 | 92.74% | 80.21% | 0.69% |
| Example 29 | 2.8 | 5 | 88.03% | 81.03% | 0.64% |
| Example 30 | 2.8 | 0 | 92.89% | 68.15% | 1.32% |
| Example 31 | 2.8 | 5.8 | 80.26% | 69.74% | 1.02% |
| Example 32 | 2.8 | 9.8 | 72.46% | 60.19% | 1.35% |
| Comparative Example 1 | 2.8 | / | 93.01% | 57.33% | 3.17% |
| Comparative Example 2 | / | / | 86.22% | 50.06% | 4.06% |
| Comparative Example 3 | 2.8 | / | 58.31% | 0% | 5.14% |
| Comparative Example 4 | 2.8 | / | 89.69% | 52.37% | 3.66% |
| Comparative Example 5 | / | / | 78.06% | 45.02% | 4.11% |

According to the above results, the electrolytes for sodium secondary batteries of Examples 1 to 32 all contain an additive, where the additive includes one or more of 1,3-propane sultone (1,3-PS), 1-4-butane sultone (BS), 1,3-propylene sultone (PES), methylene disulfonate (MMDS), ethylene sulfate (DTD), and 4-methylethylene sulfate (MeDTD).

Comparing Examples 1 to 8, 11 to 25, and 28 to 32 with Comparative Example 1, Example 10 with Comparative Example 2, Example 9 with Comparative Example 3, and Examples 26 and 27 with Comparative Examples 4 and 5, it can be seen that the additive can improve the high-temperature capacity retention rate of the battery, enhance the high-temperature cycling performance of the battery, reduce the high-temperature swelling rate of the battery, alleviate the high-temperature gas generation phenomenon of the battery, and improve the electrochemical performance and safety performance of the battery at high temperatures.

From Examples 1 to 32, it can be seen that when the mass percentage of the additive is 0.2% to 10%, based on the total mass of the electrolyte, the battery has excellent room-temperature cycling performance and high-temperature cycling performance, with low high-temperature gas generation, thereby extending the usable temperature range of the battery.

Comparing Examples 1, 28, 29, and 31 with Examples 30 and 32, it can be seen that when the mass percentage of the additive is 0.3% to 6% based on the total mass of the electrolyte, the high-temperature cycling performance of the battery can be improved, the high-temperature gas generation phenomenon can be alleviated, and the electrochemical performance and safety performance of the battery can be improved.

The electrolytes in Examples 1 to 32 further include a sodium salt, where the sodium salt includes sodium hexafluorophosphate (NaPF₆) or sodium tetrafluoroborate (NaBF₄). The mass percentage of the sodium salt is 3% to 40% based on the total mass of the electrolyte. The battery has excellent room-temperature cycling performance and high-temperature cycling performance, with low high-temperature gas generation, thereby extending the usable temperature range of the battery.

Comparing Examples 1, 3, and 4 with Examples 2 and 5, it can be seen that when the mass percentage of the sodium salt is 5% to 30% based on the total mass of the electrolyte, the room-temperature cycling performance and high-temperature cycling performance of the battery can be improved, the high-temperature gas generation phenomenon of the battery can be alleviated, and the electrochemical performance and safety performance of the battery can be improved.

Comparing Examples 1, 7, and 8 with Example 9, it can be seen that the electrolyte contains an ether solvent, where the ether solvent is one or more of ethylene glycol dimethyl ether (DME), diethylene glycol dimethyl ether (DEGDME), and ethylene glycol diethyl ether (DEE), which can improve the room-temperature cycling performance and high-temperature cycling performance of the battery, alleviate the high-temperature gas generation phenomenon of the battery, and improve the electrochemical performance and safety performance of the battery.

Comparing Examples 1, 11, and 12 with Example 10, it can be seen that the electrolyte further includes a lithium salt, where the lithium salt includes lithium hexafluorophosphate (LiPF₆), lithium difluorooxalatoborate (LiODFB), or lithium bis(fluorosulfonyl)imide (LiFSI), which can further improve the room-temperature cycling performance and high-temperature cycling performance of the battery, alleviate the high-temperature gas generation phenomenon of the battery, and improve the electrochemical performance and safety performance of the battery.

Comparing Examples 1 and 26 with Example 27, it can be seen that through the provision of a primer coating on at least one side of the negative electrode current collector, where the primer coating includes a carbon coating, the room-temperature cycling performance and high-temperature cycling performance of the battery can be improved, the high-temperature gas generation phenomenon of the battery can be alleviated, and the electrochemical performance and safety performance of the battery can be improved.

Comparing Examples 1, 28, and 29 with Examples 30 and 32, it can be seen that through the controlling of the surface density X g/m² of the primer coating on at least one side of the negative electrode current collector and the mass percentage Z% of the additive based on the total mass of the electrolyte to satisfy 0.1 ≤ Z - 0.01X ≤ 5, the high-temperature cycling performance of the battery can be improved, the high-temperature gas generation phenomenon of the battery can be alleviated, and the usable temperature range of the battery can be extended.

Comparing Examples 1, 18, and 19 with Examples 20 and 21, it can be seen that through the controlling of the surface density X g/m² of the primer coating on at least one side of the negative electrode current collector and the mass percentage Y% of the lithium salt based on the total mass of the electrolyte to satisfy the relational expression 0.84 ≤ Y - 0.01X ≤ 5.84, the room-temperature cycling performance and high-temperature cycling performance of the battery can be improved, the high-temperature gas generation phenomenon of the battery can be alleviated, and the electrochemical performance and safety performance of the battery can be improved.

Comparing Examples 1, 22, and 23 with Examples 24 and 25, it can be seen that when the surface density of the primer coating is 5 g/m² to 50 g/m², the room-temperature cycling performance and high-temperature cycling performance of the battery can be improved, the high-temperature gas generation phenomenon of the battery can be alleviated, and the electrochemical performance and safety performance of the battery can be improved.

Comparing Example 1 with Example 26, it can be seen that when the sodium secondary battery is a sodium metal battery with no negative electrode, the room-temperature cycling performance and high-temperature cycling performance of the battery can be improved, the high-temperature gas generation phenomenon of the battery can be alleviated, and the electrochemical performance and safety performance of the battery at high temperatures can be improved.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte for a sodium secondary battery, **characterized in that** the electrolyte comprises an additive, wherein the additive comprises a sulfate ester compound or a sulfonate ester compound.

2. The electrolyte according to claim 1, **characterized in that** the sulfonate ester compound comprises one or more of compounds represented by formula I: 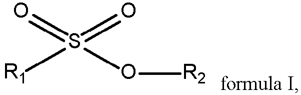 wherein
R1 and R2 together with sulfur and oxygen to which they are connected form a 4-, 5-, or 6-membered ring, wherein the ring optionally has a double bond and optionally contains one or two sulfonate ester groups, and hydrogen on the ring is optionally replaced by a halogen or a C₁₋₃ alkyl group.

3. The electrolyte according to claim 1 or 2, **characterized in that** the sulfonate ester compound comprises one or more of 1,3-propane sultone, 3-fluoro-1,3-propane sultone, 1-methyl-1,3-propane sultone, 1,4-butane sultone, 1,4-butene sultone, 1,3-propene sultone, and methylene disulfonate, optionally one or more of 1,3-propane sultone, 1,4-butane sultone, 1,3-propylene sultone, and methylene disulfonate.

4. The electrolyte according to any one of claims 1 to 3, **characterized in that** the sulfate ester compound comprises one or more of compounds represented by formula II: 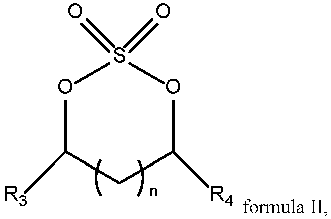 wherein
n is any integer from 0 to 3, and R₃ and R₄ are each independently selected from hydrogen, fluorine, cyano group, alkenyl group, substituted or unsubstituted C₁₋₆ alkyl group, and

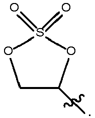

5. The electrolyte according to any one of claims 1 to 4, **characterized in that** the sulfate ester compound comprises one or more of ethylene sulfate, 4-methyl-ethylene sulfate, 4-fluoroethylene sulfate, 4-n-propylethylene sulfate, 4,4'-bis-ethylene sulfate, 4-vinyl-ethylene sulfate, 4-ethylethylene sulfate, 4,5-difluoroethylene sulfate, and 4-cyanoethylene sulfate, optionally one or two of ethylene sulfate, and 4-methyl-ethylene sulfate.

6. The electrolyte according to any one of claims 1 to 5, **characterized in that**, based on a total mass of the electrolyte, a mass percentage of the additive is 0.2%-10%, optionally 0.3%-6%.

7. The electrolyte according to any one of claims 1 to 6, **characterized in that** the electrolyte further comprises a sodium salt and an ether solvent, and based on the total mass of the electrolyte, a mass percentage of the sodium salt is 3%-40%, optionally 5%-30%.

8. The electrolyte according to claim 7, **characterized in that** the sodium salt comprises one or more of sodium hexafluorophosphate, sodium tetrafluoroborate, sodium hexafluoroarsenate, and sodium trifluoroacetate.

9. The electrolyte according to claim 7 or 8, **characterized in that** the ether solvent comprises one or more of ethylene glycol dimethyl ether, diethylene glycol dimethyl ether, triethylene glycol dimethyl ether, tetraethylene glycol dimethyl ether, ethylene glycol diethyl ether, ethylene glycol dibutyl ether, tetrahydrofuran, and methyltetrahydrofuran, optionally one or more of ethylene glycol dimethyl ether, diethylene glycol dimethyl ether, and ethylene glycol diethyl ether.

10. The electrolyte according to any one of claims 1 to 9, **characterized in that** the electrolyte further comprises a lithium salt.

11. The electrolyte according to claim 10, **characterized in that** the lithium salt comprises one or more of lithium hexafluorophosphate, lithium tetrafluoroborate, lithium perchlorate, lithium hexafluoroarsenate, lithium trifluoroacetate, lithium tetraphenylborate, lithium trifluoromethylsulfonate, lithium bis(oxalatoborate), lithium difluorooxalatoborate, lithium bis(fluorosulfonyl)imide, and lithium bis(trifluoromethylsulfonyl)imide.

12. A sodium secondary battery, **characterized in that** the sodium secondary battery comprises the electrolyte according to any one of claims 1 to 11.

13. The sodium secondary battery according to claim 12, **characterized in that** the sodium secondary battery comprises a negative electrode plate, the negative electrode plate comprising a negative electrode current collector and a primer coating formed on at least one side of the negative electrode current collector, and
the sodium secondary battery satisfies the following relational expression: 0.1 ≤ Z - 0.01 X ≤ 5, wherein
X g/m² is a surface density of the primer coating, and Z% is a mass percentage of the additive based on a total mass of the electrolyte.

14. The sodium secondary battery according to claim 12 or 13, **characterized in that** the sodium secondary battery comprises the negative electrode plate, the negative electrode plate comprising the negative electrode current collector and the primer coating formed on at least one side of the negative electrode current collector, and the electrolyte comprises a lithium salt, and
the sodium secondary battery satisfies the following relational expression: 0.84 ≤ Y - 0.01 X ≤ 5.84, wherein
X g/m² is the surface density of the primer coating, and Y% is a mass percentage of the lithium salt based on the total mass of the electrolyte.

15. The sodium secondary battery according to claim 13 or 14, **characterized in that** the surface density of the primer coating is 5 g/m² - 50 g/m².

16. The sodium secondary battery according to any one of claims 13 to 15, **characterized in that** the primer coating comprises one or more of carbon coating, alloy coating, and metal oxide coating, optionally carbon coating.

17. The sodium secondary battery according to any one of claims 13 to 16, **characterized in that** the primer coating contains one or more of super conductive carbon black, Ketjen black, acetylene black, carbon nanotubes, and graphene.

18. The sodium secondary battery according to any one of claims 12 to 17, **characterized in that** the sodium secondary battery is a sodium metal battery with no negative electrode.

19. An electric device, **characterized by** comprising the sodium secondary battery according to any one of claims 12 to 18.
